# EUROPÄISCHE PATENTSCHRIFT

(11) **EP 0 750 547 B1**
(45) Veröffentlichungstag und Bekanntmachung des Hinweises auf die Patenterteilung: **03.05.2000**
(21) Anmeldenummer: 95909766.8
(22) Anmeldetag: 22.02.1995
(51) Int. Cl.: B29C 69/00

(54) **VERFAHREN UND VORRICHTUNG ZUR HERSTELLUNG EINER FLIESSMITTELPACKUNG ÜBER EINE HALBSCHALE**
PROCESS AND DEVICE FOR PRODUCING A FLOWABLE PRODUCT PACKAGE VIA A SHELL
PROCEDE ET DISPOSITIF POUR LA FABRICATION D'UN EMBALLAGE POUR PRODUITS COULANTS PAR L'INTERMEDIAIRE D'UNE COQUE

(30) Priorität: 12.03.1994 DE 4408445
(43) Veröffentlichungstag der Anmeldung: 02.01.1997
(73) Patentinhaber: Tetra Laval Holdings & Finance SA, 1009 Pully (CH)
(72) Erfinder: LIEBRAM, Udo, D-64319 Pfungstadt (DE); REIL, Wilhelm, D-64625 Bensheim (DE); KORUS, Bernhard, D-64289 Darmstadt (DE)
(74) Vertreter: Weber, Dieter, Dr.
(86) Internationale Anmeldenummer: EP9500639
(87) Internationale Veröffentlichungsnummer: WO9525004

(56) Entgegenhaltungen:
- EP-A- 0 453 715
- CH-A- 437 102
- DE-A- 3 929 664
- US-A- 3 235 638

## Beschreibung

Die Erfindung betrifft ein Verfahren und eine Vorrichtung zur Herstellung einer Halbschale aus thermoformbarem Kunststoff, bei welchem wenigstens ein zu bearbeitender, plattenförmiger Abschnitt des Kunststoffmaterials intermittierend auf vertikalem Weg durch wenigstens zwei in Bewegungsrichtung hintereinander angeordnete Erwärmungsstationen nach unten zu einer Tiefziehstation transportiert und danach tiefgezogen wird.

Aus der EP-A-0.453.715 ist ein Verfahren zum Herstellen einer Fließmittelpackung mittels Tiefziehen einer Halbschale mit den vorstehend genannten Merkmalen bekannt, bei welchem ein Zuschnitt aus dem erwähnten Kunststoff in Gestalt einer Platte für die Behandlungsstufen des Verfahrens bzw. der Herstellungsvorrichtung zugeführt wird. Die Zuschnitte aus Kunststoff werden durch Wärmekontakt mit Heizbacken in zwei Stufen erwärmt und dann von dem jeweils untersten Heizbacken direkt in die Tiefziehform unter Bildung einer Halbschale mit einem rahmenförmigen Streifen tiefgezogen. Bei der bekannten Vorrichtung bilden ein mittig angeordneter, translatorisch entlang einem ersten Weg bewegbarer Vorschubwärmebacken mit beheizbarem Hauptträger und Hauptsaugplatten sowie zu beiden Seiten außen angeordnete und senkrecht zu dem ersten Weg bewegbarer Außenwärmebacken eine Erwärmungsstation, um wenigstens einen zu bearbeitenden, plattenförmigen Abschnitt des Kunststoffmaterials intermittierend auf vertikalem Weg durch wenigstens zwei in Bewegungsrichtung hintereinander angeordnete Erwärmungsstationen nach unten zu einer Tiefziehstation mit Tiefziehwerkzeugen zu transportieren und danach tiefzuziehen.

Zur Bildung einer Packung werden zwei solcher Halbschalen längs ihrer rahmenförmigen Streifen, die jeweils in einer Ebene liegen, zusammengelegt und unter Einwirkung von Wärme miteinander verschweißt.

Das besonders Günstige der bekannten Vorrichtung und auch des bekannten Herstellungsverfahrens liegt darin, daß der gesamte Zuschnitt ohne Abfall zu einer Halbschale bzw. zu einer Gruppe von Halbschalen geformt wird, weil der Zuschnitt in seiner Gesamtheit durch den direkten Wärmekontakt mit den Wärmebacken auf die gewünschte Thermoformtemperatur gebracht und danach tiefgezogen wird.

Für die schnelle und intensive Erwärmung der Zuschnitte aus Kunststoff wurden diese mit Vakuum von einem Wärmebacken aufgenommen und während des Stillstandes und der Bewegung desselben erwärmt, dabei auf den nächsten Wärmebacken übergeben, wiederum erwärmt, auf einen weiteren Wärmebacken zurückgegeben usw., wodurch der sich langsam erwärmende Zuschnitt aus Kunststoff von hin- und herbewegenden Werkzeugen z.B. vertikal von oben nach unten (unter Zwischenschaltung kurzer horizontaler Wege) transportiert wird.

Es hat sich unter gewissen Bedingungen mit Nachteil gezeigt, daß das Abnehmen eines erwärmten Zuschnittes aus Kunststoff von einem Wärmebacken im Bereich der oberen Kante und insbesondere der oberen Ecken empfindlich und problematisch ist. Man hat nämlich festgestellt, daß noch vor dem endgültigen Abnehmen eines auf verhältnismäßig hohe Temperatur erwärmten Zuschnittes seine Übergabe unpräzise erfolgt, wobei Faltenbildung oder gar ein Herunterklappen im oberen Bereich des erwärmten Zuschnittes anzutreffen ist. Dadurch wird der Transport eines plattenförmigen Zuschnittes ersichtlich problematisch. Durch die vertikale Bewegung des in der vertikalen Ebene stehenden Zuschnittes aus erwärmtem und daher schon erweichten Kunststoff neigt der Zuschnitt in seinem oberen Bereich manchmal dazu, daß die eine oder andere Ecke oder die gesamte obere horizontale Kante hängenbleibt oder sich zu früh ablöst und einrollt. Zwar liegt die Fehlerrate nur bei 10⁻³, bei Hochleistungsverfahren moderner Packungsmaschinen ist dies aber ein nicht tragbarer Fehler.

Der Erfindung liegt daher die Aufgabe zugrunde, die vorstehend erwähnten Unsicherheiten im oberen Bereich der zu bearbeitenden Zuschnitte bei der Packungsherstellung zu vermeiden und insbesondere das bekannte Verfahren und die bekannte Vorrichtung so zu verbessern, daß die Erwärmung des Kunststoffmaterials vor dem Tiefziehen technisch einfacher und zuverlässiger erfolgen kann.

Erfindungsgemäß wird diese Aufgabe für das Verfahren mit den Merkmalen der eingangs genannten Art dadurch gelöst, daß das Kunststoffmaterial in Form einer kontinuierlichen Bahn von oberhalb der ersten Erwärmungsstation unter Erwärmung der Bahnabschnitte während der Bewegung vertikal nach unten bis zur Tiefziehstation zugeführt wird, an deren oberem Ende der vorderste, unterste plattenförmige Abschnitt von der Kunststoffbahn abgetrennt und tiefgezogen wird. Der besondere Vorteil dieses Verfahrens besteht darin, daß im gesamten Abschnitt für die Erwärmung der jeweilige Bahnabschnitt, aus dem später die Halbschale geformt und die halbe Packung hergestellt wird, an seiner jeweils oberen horizontalen Kante von der Bahn selbst stabil und präzise in der gewünschten Position gehalten wird. Der einzelne zu bearbeitende Abschnitt der Kunststoffbahn ist bis kurz vor dem Tiefziehvorgang mit der Kunststoffbahn noch aus einem Stück, so daß das unerwünschte Ablösen von Ecken oder einer ganzen horizontalen Kante am vertikalen oberen Ende eines Erwärmungsbereiches entfällt. Gerade die oberen Kanten der Bahnabschnitte werden von der Bahn selbst gehalten, weil die Bahnabschnitte noch nicht separiert sind. Dieser Zustand reicht von der vertikal obersten Aufnahmeposition, wo die Kunststoffbahn zugeführt wird, bis zum Trennbereich zwischen dem Block des Tiefziehwerkzeuges und dem jeweils darüber befindlichen Wärmebacken.

Es hat sich gezeigt, daß bei der Durchführung dieses Verfahrens und auch beim Betrieb der nachfolgend noch zu beschreibenden Vorrichtung eine freie obere Kante eines Bahnabschnittes im Erwärmungsbereich nicht existiert, so daß auch diese nicht umkippen oder herunterhängen kann. Vielmehr wird eine solche vertikale Kante von der darüber befindlichen Bahn, an welcher der Abschnitt noch festhängt, gehalten. Erst im unteren Bereich über dem Tiefziehblock erfolgt das Abtrennen des tiefzuziehenden Bahnabschnittes aus Kunststoff.

Durch diese Maßnahmen ist die gesamte Handhabung der tiefzuziehenden Bahnabschnitte vereinfacht. Es brauchen nicht mehr schon zuvor vereinzelte Zuschnitte ergriffen, in andere Positionen geholt, an Wärmebacken angelegt oder auf andere Weise gehandhabt werden. Diese Bewegungen und die damit verbundenen Schwierigkeiten sind durch die erfindungsgemäßen Maßnahmen eliminiert.

Vorteilhaft ist es gemäß der Erfindung dabei, wenn das Abtrennen des untersten plattenförmigen Abschnittes von der Kunststoffbahn in erwärmtem, plastischem Zustand durch mechanisches Abquetschen während des Tiefziehens erfolgt. Es sind keine hohen Schneidkräfte und aufwendige Schneidwerkzeuge erforderlich. Vielmehr erfolgt das Abtrennen erfindungsgemäß erst nach dem Erwärmen der Kunststoffbahn auf die vorgesehene höchste Temperatur, bei welcher der unterste und vorderste Abschnitt der Kunststoffbahn eine teigartige Konsistenz hat mit der Folge, daß ein Messer den Kunststoff sehr leicht zur Seite drücken bzw. abquetschen kann und gleichwohl eine präzise Abtrennung entlang einer gewünschten Linie erfolgt.

Bei vorteilhafter weiterer Ausgestaltung der Erfindung werden zwei kontinuierliche Kunststoffbahnen im Abstand voneinander gleichzeitig vertikal so nach unten bewegt, daß ihre ebenen Flächen parallel und einander zugewandt liegen, und die tiefgezogenen Halbschalen werden nach dem Tiefziehvorgang zur Bildung des Volumens einer Fließmittelpackung längs ihrer Ränder miteinander verschweißt. Auf diese Weise wird über eine Halbschale eine Fließmittelpackung erstellt. Es versteht sich, daß man auch mehrere Paare von Halbschalen nebeneinander tiefziehen und damit mehrere Fließmittelpackungen nebeneinander, vorzugsweise mit einem einzigen Hub, herstellen kann. Auf diese Weise wird z.B. ein erster zu bearbeitender, plattenförmiger Abschnitt der Kunststoffbahn sowie ein weiterer, im Abstand von dem ersten angeordneter plattenförmiger Abschnitt paarweise mit gleicher Bewegung intermittierend auf vertikaler Bahn durch die zwei Erwärmungsstufen nach unten transportiert.

So werden zwar plattenförmige Abschnitte während hin- und hergehender translatorischer Bewegungen auf die gewünschte Temperatur erwärmt, diese Abschnitte befinden sich aber noch einstückig an der Kunststoffbahn und werden daher präzise und sauber in der gewünschten Lage gehalten. Erst mit dem Tiefziehvorgang erfolgt das Separieren des plattenförmigen Abschnittes, wobei außen in einer Ebene liegende Ränder zwar noch warm und klebefähig sind, im Mittelfeld aber die Halbschale gebildet wird. Es versteht sich, daß dann in einem weiteren Schritt die tiefgezogenen Halbschalen längs ihrer Ränder miteinander verschweißt werden, wodurch eine gegebenenfalls einseitig offene Fließmittelpackung oder zwei nach außen hin noch nicht geöffnete Fließmittelpackungen als Paar gebildet werden.

Zur Durchführung des vorstehend beschriebenen Verfahrens dient eine Vorrichtung, bei der ein mittig angeordneter, translatorisch entlang einem ersten Weg bewegbarer Vorschubwärmebacken mit beheizbarem Hauptträger und Hauptsaugplatten sowie zu beiden Seiten außen angeordnete und senkrecht zu dem ersten Weg bewegbare Außenwärmebacken eine Erwärmungsstation bilden, um wenigstens einen zu bearbeitenden, plattenförmigen Abschnitt des Kunststoffmaterials intermittierend auf vertikalem Weg durch wenigstens zwei in Bewegungsrichtung hintereinander angeordnete Erwärmungsstationen nach unten zu einer Tiefziehstation mit Tiefziehwerkzeugen zu transportieren und danach tiefzuziehen. Zur Lösung der vorstehend genannten Aufgabe sieht die Erfindung hinsichtlich dieser Vorrichtung vor, daß über der obersten Erwärmungsstation eine Umlenkrolle mit vorgeschalteten Fördereinrichtungen für eine zugeführte, kontinuierliche Kunststoffbahn vorgesehen ist und daß auf der Höhe der Oberkante des Tiefziehwerkzeuges ein über die Breite der Kunststoffbahn reichendes Messer bewegbar angebracht ist.

Der Fachmann hätte zur Lösung der gestellten Aufgabe komplizierte Einrichtungen schaffen können, um die jeweils vertikal oberste, sich horizontal erstreckende Kante eines separierten Kunststoffabschnittes zu halten, zu ergreifen und zu stützen. Der Aufwand solcher Mittel wäre aber sowohl vom technischen als auch vom wirtschaftlichen Standpunkt unvertretbar. Überraschend einfach hingegen ist der erfindungsgemäße Vorschlag, die Kunststoffbahn, aus welcher die zu bearbeitenden plattenförmigen Abschnitte gebildet werden sollen, erst derart spät in die einzelnen Abschnitte zu zerlegen, daß der Erwärmungsvorgang mit den sensiblen Übergabebewegungen von einem Wärmebacken zum anderen noch von der kontinuierlichen Kunststoffbahn abhängend direkt erfolgt. Als weiter überraschend hat es sich gezeigt, daß trotz dieser Technik keineswegs mehr Abfall entstehen muß und entsteht als bei den bekannten aufwendigeren Maschinen, bei denen die separierten plattenförmigen Zuschnitte transportiert werden.

Man führt über bekannte Fördereinrichtungen die Kunststoffbahn zu einer Umlenkrolle, die entsprechend der erfindungsgemäßen Lehre über der obersten Erwärmungsstation angeordnet ist. Die kontinuierliche Kunststoffbahn kann auf diese Weise intermittierend an einem Stück durch die Erwärmungsstation geführt und präzise gehaltert werden, bis die Tiefziehstation erreicht ist. Durch die Anordnung des bewegbaren Messers im Bereich der Oberkante des Tiefziehwerkzeuges kann man den Tiefziehvorgang während des Separierens des Zuschnittes von der Bahn vornehmen, vorzugsweise auch während des Anlegens der Außenränder des Tiefziehwerkzeuges an die wärmende Gegenplatte (Wärmebacken). Hier ergeben sich keine Übergabeprobleme, denn die Tiefziehtechnik ist technisch ausgereift und verwendet wenigstens auf der Seite der Tiefziehform ein gekühltes Werkzeug, so daß die eingangs beschriebenen Probleme an dieser Stelle nicht mehr auftreten können.

Günstig ist es gemäß der Erfindung weiterhin, wenn auf der Höhe unter dem Tiefziehwerkzeug und seitlich in horizontalem Abstand von einer vertikalen Symmetrieebene sowie voneinander zwei Vorratsrollen für je eine Kunststoffbahn angeordnet sind, die jeweils über Fördereinrichtungen zu einer seitlich neben der Symmetrieebene angeordnete Umlenkrolle bewegbar ist und daß zwei im Abstand voneinander angeordnete, bewegbare, längliche Messer vorgesehen sind, die parallel zueinander und zur Symmetrieebene angeordnet sind.

Denkt man sich eine ortsfeste Symmetrieebene, dann kann man zwei Kunststoffbahnen im Abstand von dieser Symmetrieebene vertikal so nach unten bewegen, daß sich im oberen Bereich die Erwärmungszonen und im unteren Bereich die Tiefziehstationen befinden. Dabei befinden sich die ebenen Flächen der Kunststoffbahn parallel zueinander und sind einander zugewandt. Auf jeder Seite der Symmetrieebene erfolgt also paarweise auf derselben Höhe die Erwärmung eines ersten Abschnittes der Kunststoffbahn, und auch das nachgeschaltete Tiefziehen erfolgt zu beiden Seiten der Symmetrieebene derart, daß sich danach zwei tiefgezogene Halbschalen einander gegenüberstehen. Die Anordnung der Tiefziehwerkzeuge wird zweckmäßigerweise so vorgesehen, daß die Innenseiten der Halbschalen einander gegenüberstehen, so daß dann die beiden Halbschalen längs ihrer Ränder direkt aneinanderlegbar und miteinander verschweißbar sind. Erzeugt man auf diese Weise ein Paar von Halbschalen oder gar mehrere Paare von Halbschalen, dann kann man entweder zugleich ein Paar von Packungen oder sogar mehrere Paare von Packungen mit einem Behandlungsvorgang der Vorrichtung erzeugen.

Die plattenförmigen Abschnitte der Kunststoffbahn werden durch körperlichen Kontakt mit geheizten Backen erwärmt, wobei die Erwärmung auf die notwendige Temperatur zum Tiefziehen am besten auf zwei Stufen verteilt wird, denn dann kann das Herstellungsverfahren gut einem kontinuierlichen Verfahren angepaßt werden. Während die plattenförmigen Bereiche zuschnittsartig von der Bahn abgetrennt werden, haben sie die vorbestimmte Weichheit zum Tiefziehen und brauchen nur im Bereich des äußeren rahmenförmigen Streifens zwischen Wärmebacken und einem heranfahrenden Tiefziehwerkzeug gehalten zu werden, um mittels Vakuum den Mittelbereich in das Tiefziehwerkzeug hinein zu formen. Läßt man zwei einander gegenüberliegende Formhälften in zeitlich kürzestem Abstand nach dem Tiefziehen sich aufeinanderzubewegen, dann kann man die zwei tiefgezogenen Halbschalen längs der rahmenförmigen Streifen oder Ränder aufeinanderdrücken und miteinander verschweißen, gegebenenfalls sogar unter Ausnutzung der Restwärme.

Das Herstellungsverfahren für Packungen läßt sich durch die gleichzeitige Ausformung mehrerer Packungen erheblich beschleunigen. Es ist zweckmäßig, wenn bei dem erfindungsgemäßen Verfahren und mit der hier beschriebenen Vorrichtung die Erwärmung der plattenförmigen Abschnitte der Kunststoffbahn auf 160°C bis etwa 200°C, vorzugsweise 170°C bis 180°C erfolgt und wenn in jeder Erwärmungsstation etwa drei Sekunden bis fünf Sekunden, vorzugsweise zwei bis drei Sekunden, verstreichen. Auf diese Weise sind die Bahnabschnitte auf den richtigen Weichheitsgrad gebracht, insbesondere bei zwei- oder dreistufiger Erwärmung der im wesentlichen ebenen Bahnabschnitte. So kann in recht kurzer Zeit die rahmenartige Oberfläche des jeweiligen Formbackens des Tiefziehwerkzeuges die jeweilige Halbschale am rahmenförmigen Streifen bzw. an ihrem Rand erfassen, halten und entweder mit der Restwärme oder unter weiterer Erwärmung gegen den entsprechenden rahmenförmigen Streifen des Gegenstückes eines Paares derart drücken, daß aus beiden Halbschalen eine Gesamtpackung wird.

Bei der Verarbeitung der plattenförmigen Bahnabschnitte mit dem erfindungsgemäßen Verfahren ist es vorteilhaft, wenn Paare von plattenförmigen Abschnitten durch Schwerkraft, unterstützt mit gewissen Antrieben, oder mittels Druckluft/Saugluft-Antriebe durch die einzelnen Verfahrensstufen gefördert werden. Die Schwerkraft erleichtert hier den Transport in Lotrichtung, wobei in der Vorrichtung Umschaltmöglichkeiten von Vakuum auf Druckluft und umgekehrt zweckmäßig sind.

Als sehr vorteilhaft hat sich erfindungsgemäß die Verwendung einer 0,2 bis 1,7 mm, vorzugsweise 0,4 bis 1,0 mm, dicken Kunststoffbahn für die plattenförmigen Bahnabschnitte aus einem vorzugsweise gefüllten, tiefziehfähigen Thermoplast für die Herstellung der Halbschalen bzw. Fließmittelpackungen erwiesen. Kaltverformbare und auch warmverformbare Kunststoffmaterialien sind bekannt, und sie eignen sich alle zur Herstellung einer Packung nach den beschriebenen Verfahren. Vorzugsweise ist das Kunststoffmaterial der Packung tiefziehfähig, insbesondere ein thermoplastischer Kunststoff, wie z.B. Polypropen. Als thermoplastischer Kunststoff kann beispielsweise auch PVC dienen, und Polypropen ist in der Technik weitgehend als Polypropylen bekannt. Die mit dem erfindungsgemäßen Verfahren hergestellte Packung besteht bei Verwendung eines solchen Materials aus einwandfrei wiederaufarbeitbaren Teilen und Materialien (im Gegensatz zu Verbundmaterialien). Bei einer bevorzugten Ausführungsform kann man das Kunststoffmaterial, z.B. das Polypropen, auch füllen, wobei als Füllstoffe hier an Kreide, Glimmer, Talkum, Gips oder dergleichen gedacht ist. In der Praxis haben sich Füllgrade von etwa 60 % als günstig erwiesen.

Weitere Vorteile, Merkmale und Anwendungsmöglichkeiten der vorliegenden Erfindung ergeben sich aus der folgenden Beschreibung bevorzugter Ausführungsbeispiele in Verbindung mit den anliegenden Zeichnungen. Es zeigen:
- Figur 1: schematisch und teilweise abgebrochen eine Vorrichtung zur Herstellung von Fließmittelpackungen in Perspektive, wobei zahlreiche Einzelheiten weggelassen sind,
- Figur 2: schematisiert die Vorderansicht der Vorrichtung, wenn man in Richtung der Symmetrieebene und entgegen der Abförderrichtung der fertigen Reihe von Packungen blickt,
- Figur 3a und 3b: schematisiert herausgegriffen die Hauptverarbeitungsteile der Vorrichtung mit Vorschub-, Außen- und Tiefziehwerkzeug, wobei Figur 3a einen ersten und Figur 3b einen zweiten Betriebszustand darstellen,
- Figur 4: die Seitenansicht zweier Kopf an Kopf miteinander verbundener Packungen, die aus zwei entsprechend tiefgezogenen Halbschalen gebildet sind, wenn man in Richtung der durch Verschweißen verbundenen Naht blickt, bevor der Gesamtkörper zur Bildung der Einzelpackungen getrennt wurde, und
- Figur 5: eine Ansicht der Doppelpackung nach Figur 4, wenn man seitlich beispielsweise von rechts auf diese Doppelpackung in Richtung der Papierebene der Figur 4 nach links blickt, senkrecht auf die Ebene der beschriebenen Schweißnaht.

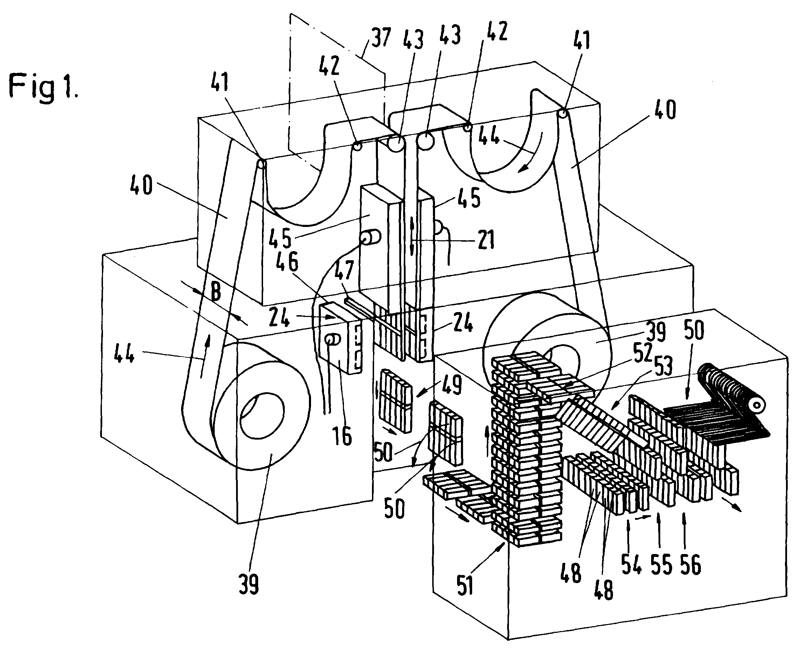

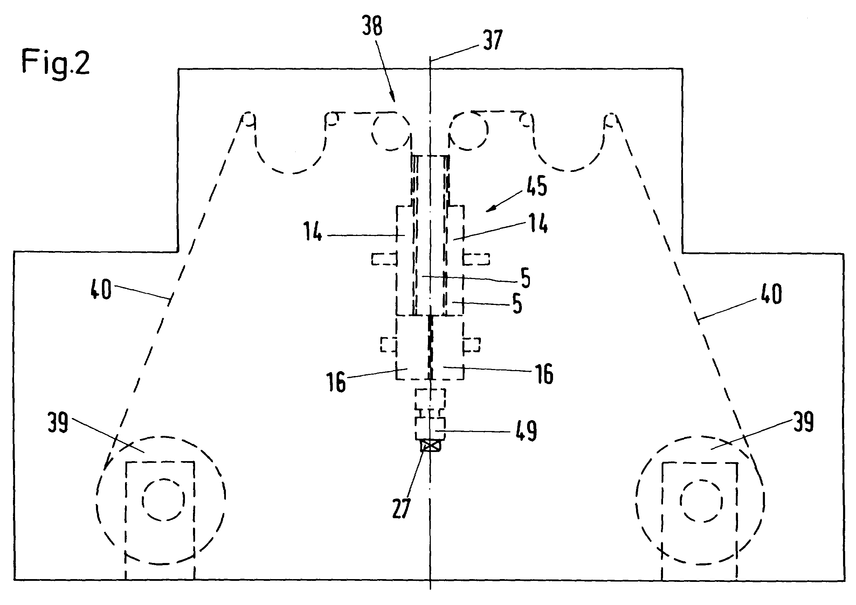

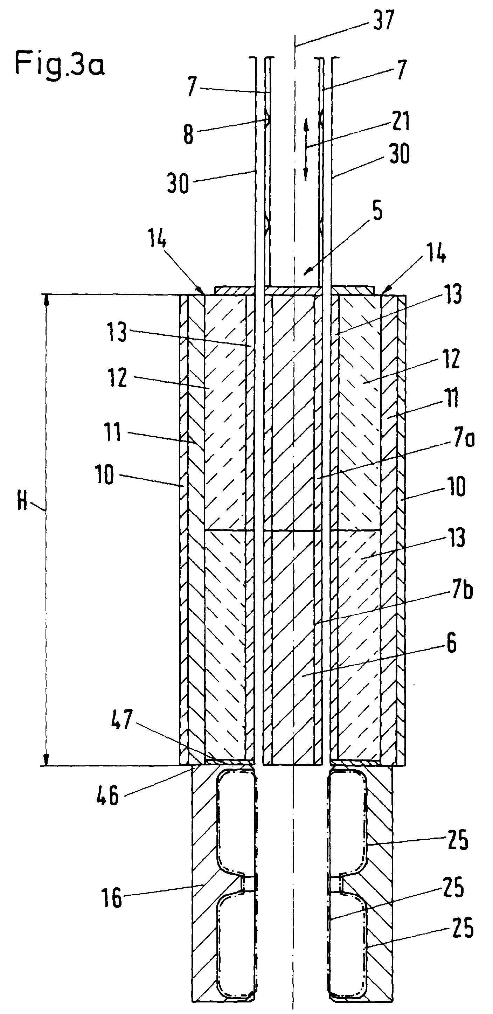

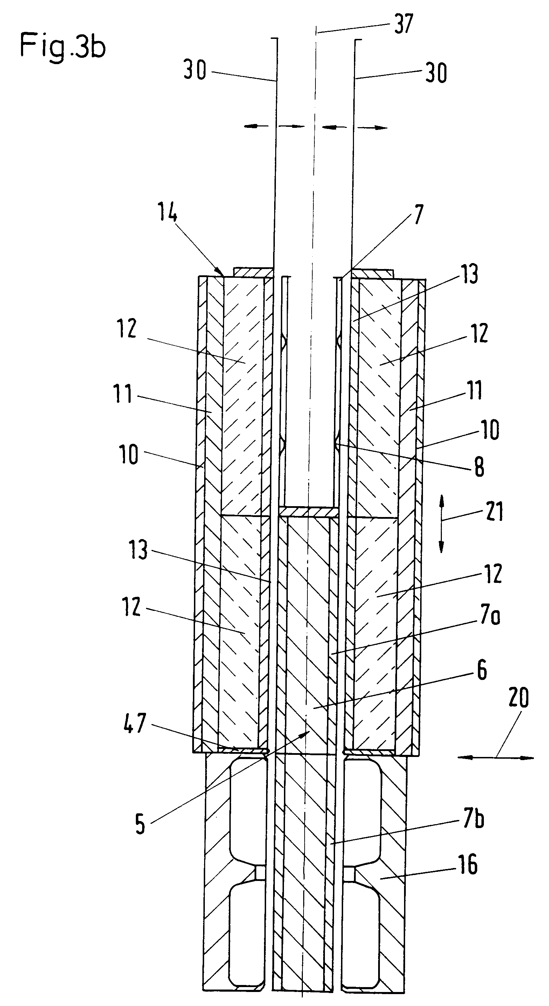

In Figur 1 ist die Vorrichtung zur Herstellung der Halbschalen mit nachgeschalteten Einrichtungen zur Herstellung von Packungen nur mit einigen wesentlichen Teilen innerhalb eines nicht näher bezeichneten Gehäuses dargestellt. Elektrische Antriebsmotore, Getriebe, Kurvenwellen und dergleichen sind weggelassen. Der Aufbau der Erwärmungs-, Tiefzieh- und Verschweißeinrichtung ist symmetrisch bezüglich der Symmetrieebene 37. Diese steht vertikal senkrecht im Raum und findet sich auch in den Figuren 2 und 3 wieder. Im unteren Bereich der Maschine befindet sich seitlich im Abstand von der Symmetrieebene auf jeder Seite eine Vorratsrolle 39, von der das Kunststoffmaterial in Form einer kontinuierlichen Bahn 40 über zwei erste Umlenkrollen 41, 42 unter Bildung einer Pufferschlaufe einer dritten Umlenkrolle 43 zugefördert wird. Die Förderrichtung der Kunststoffbahn ist jeweils durch den Pfeil 44 dargestellt. Unter den beiden Umlenkrollen 43 befindet sich oben zuerst die Aufnahmeposition mit zwei nicht erwärmten und daher relativ kalten Planen, die jeweils an dem darunterbefindlichen Werkzeug befestigt sind, wie noch anhand der Figuren 3a und 3b erläutert wird. In der Aufnahmeposition wird die kalte Bahn ergriffen und um eine Abschnittshöhe nach unten gezogen. Wäre die Bahn hier schon erwärmt, würde sie sich dehnen. Deshalb erfolgt das Ergreifen mittels Ansaugen und Reibschluß in der Aufnahmeposition auf Raumtemperatur. Darunter folgt dann die allgemein mit 45 bezeichnete Erwärmungsstation, die zusammen mit der weiter darunter angeordneten, insgesamt mit 24 bezeichneten Tiefziehstation symmetrisch so aufgebaut ist, wie schematisch in den Figuren 3a und 3b gezeigt und näher erläutert ist.

In Figur 1 sieht man, wie gerade das linke Tiefziehwerkzeug 16 geöffnet ist und wie auf jeder Seite fünf Paare von Halbschalen aneinanderhängend erzeugt worden sind. Sie erscheinen zwecks besserer Darstellung herausgenommen.

Auf der Höhe der Oberkante 46 des Tiefziehwerkzeuges 16 erstreckt sich ein über die Breite B der Kunststoffbahn 40 reichendes Messer 47, welches auf die Symmetrieebene 37 zu und von dieser fort durch nicht gezeigte Antriebe und Führungen in horizontaler Richtung (Doppelpfeil 20) bewegbar ist.

Nach dem Verschweißen der Halbschalengruppen miteinander ist das Volumen einer Fließmittelpackung 48 geformt und eine Gruppe von Kopf gegen Kopf verbundener Packungen erzeugt, wie bei 49 dargestellt.

In einer nächsten, nicht dargestellten Station wird diese Gruppe von verbundenen Packungen 49 entlang der gebogenen Pfeile 50 in die Horizontale verbracht und dort in einer Kühlstation 51 langsam vertikal von unten nach oben befördert. Von dort werden die Packungen in einer nicht dargestellten Trenneinrichtung, die nur allgemein mit 52 bezeichnet ist, so getrennt, daß an der Öffnungsvorrichtung oben offene Packungen, in einer Reihe aneinanderliegend, entstanden sind. Diese werden in der Wendevorrichtung 53 aus der Horizontalen in die Vertikale verbracht, bis sie unten auf eine Transporteinrichtung 54 gelegt werden. Von hier aus erfolgen in an sich bekannter Weise weitere Verarbeitungsvorgänge, wie z.B. das Abstanzen von Eckenteilen an der Station 55, das Anheben, Füllen mit Füllgut und Wiederabsenken an der Station 56 und das Verschließen der Öffnungsvorrichtung in der allgemein mit 57 bezeichneten Station.

Blickt man von vorn auf die Symmetrieebene 37, dann erscheint diese in Figur 2 als vertikale Linie, die sich senkrecht durch die Erwärmungsstation 45 und die darunter angeordneten Tiefziehwerkzeuge 16 bis durch die auf dem Förderband 27 abgelegte Doppelpackungsreihe 49 erstreckt.

Die Einrichtungen für die Erwärmung und das Tiefziehen 45, 24 sind spiegelsymmetrisch zur Ebene 37 und schematisch in den Figuren 3a und 3b dargestellt. Man braucht beispielsweise nur eine Hälfte zu beschreiben, weil die andere Hälfte gleich aufgebaut ist.

An der in Figur 2 oben in der Mine dargestellten Hubvorrichtung 38 ist der allgemein mit 5 bezeichnete Vorschubwärmebacken angebracht, der folglich auf vertikalem Weg in Richtung des Doppelpfeiles 21 translatorisch nach oben und unten um den halben Hub H bewegbar ist.

Bei dem Schema der Figuren 3a und 3b sollen auf jeder Seite in dem Tiefziehwerkzeug 16 unten zwei einseitig offene Halbschalen 25 geformt werden.

Der allgemein mit 5 bezeichnete Vorschubwärmebacken ist in jeder Hälfte so aufgebaut, daß er in der Mitte einen beheizbaren Hauptträger 6 und drei übereinander angeordnete Hauptsaugplatten haltert. Hier gibt es speziell eine kalte obere Hauptsaugplatte 7 mit Saugern 8, eine mittlere Hauptsaugplatte 7a und eine untere Hauptsaugplatte 7b. Der Hauptträger 6 erstreckt sich über alle drei Saugplatten 7, 7a und 7b einstückig. Die gesamte vertikale Länge des Vorschubwärmebackens 5 beträgt etwa 1 m.

Zur Seite versetzt befinden sich die die Erwärmungsstation 45 bildenden Außenwärmebacken 14. Deren Bewegungsrichtung steht gemäß Doppelpfeil 20 senkrecht auf der Symmetrieebene 37.

Auf der linken Seite der Symmetrieebene 37, d.h. auf der dem Vorschubwärmebacken 5 abgewandten Seite weist der Außenwärmebacken 14 einen sich über seine ganze Höhe H erstreckenden Außenträger 10 auf, an welchem auf der dem Vorschubwärmebacken 5 zugewandten Seite eine Wärmeisolation 11 und an dieser - wiederum dem Backen 5 zugewandt -ein Außenheizkörper 12 und weiter innen, dem Wärmebacken 5 zugewandt, eine Außensaugplatte 13 angebracht sind. Insgesamt weist der Außenwärmebacken 14 auf seiner Höhe H zwei Gruppen von Außensaugplatten 13 auf, deren Fläche jeweils gleich groß ist wie die der Hauptsaugplatten 7, 7a und 7b. An der oberen Außensaugplatte 13 sind oben jeweils unbeheizte und daher relativ kalte Außendruckplatten 30 befestigt, die bei der horizontalen Bewegung der Außenwärmebacken 14 mit diesen mitbewegt werden. Vergleichbar sind auf dem oberen Hauptträger 6 die zwei unbeheizten und daher relativ kalten Hauptsaugplatten 7 angebracht. Außensaugplatten und Hauptsaugplatten stehen einander im wesentlichen höhengleich und längengleich gegenüber, und sie können mit leichtem Druck aufeinandergelegt werden, so daß ein guter Wärmeübergang zu der dazwischen befindlichen Kunststoffbahn 40 erreichbar ist.

Das separat von den Saugplatten angeordnete und bewegbare Tiefziehwerkzeug 16 ist ebenfalls horizontal in Richtung des Doppelpfeiles 20 bewegbar.

Im Betrieb funktioniert die Vorrichtung wie folgt:

Die Kunststoffbahn 40 wird vertikal von oben nach unten auf jeder Seite der Symmetrieebene 37 intermittierend auf vertikalem Weg in Richtung des Pfeiles 21 nach unten bewegt. Sie ist bis auf die Höhe der Oberkante 46 des Tiefziehwerkzeuges 16 - bzw. geringfügig darüber - einstückig und wird erstmals auf dieser Höhe von dem in Richtung des Doppelpfeiles 20 bewegbaren Messer 47 durch Abquetschen geschnitten.

Gemäß Figur 3a ist das Tiefziehwerkzeug 16 nach links weggezogen, so daß sich der ganze Vorschubwärmebacken 5 um eine Station nach unten bewegen kann. Damit steht die kalte Hauptsaugplatte 7 der kalten Außendruckplatte 30 gegenüber, die in Richtung des horizontalen Pfeiles 20 auf die kalte Hauptsaugplatte 7 zufährt. Der dazwischen angeordnete Bahnabschnitt wird dadurch gegen die innere, kalte Hauptsaugplatte 7 angedrückt, damit deren Sauger 8 wirksam werden können. Jetzt ist der genannte untere Bahnabschnitt festgehalten und bewegt sich bei der nächsten Abwärtsbewegung in Richtung des vertikalen Pfeiles 21 um eine Stufe nach unten, so daß die Position der Figur 3b erreicht ist.

In Figur 3b stehen die äußeren kalten Außendruckplatten 30 ohne ein Gegenüber, während die kalte Hauptsaugplatte 7 mit den Saugern der jeweils oberen Außensaugplatte 13 gegenübersteht. Dadurch steht die Hauptsaugplatte 7a der unteren Außensaugplatte gegenüber. Zunächst war beim Herunterbewegen die Vorderkante der Kunststoffbahn 40, d.h. der gerade betrachtete Bahnabschnitt, auf der kalten Hauptsaugplatte 7 angesaugt. Hier wird auf Druckluft umgeschaltet, so daß der Bahnabschnitt auf die Außensaugplatte 13 bewegt wird, auf der nicht dargestellte Sauger den Bahnabschnitt heranziehen. Bei dieser Außensaugplatte 13 handelt es sich um einen Wärmebacken, so daß hier die erste Stufe der Erwärmung beginnt. Die jeweiligen Außenwärmebacken 14 werden dann horizontal in Richtung des Pfeiles 20 nach außen bewegt und nehmen unter Erwärmen den unteren Bahnabschnitt, welcher noch an der Kunststoffbahn 40 hängt, mit. Die obere Hauptsaugplatte 7 ist inzwischen frei und kann zusammen mit dem gesamten Vorschubwärmebacken 5 leer nach oben in die Position der Figur 3a bewegt werden. Dort wird der nächste, noch kalte plattenförmige Abschnitt der Kunststoffbahn 40 angesaugt. Da nun die mittlere Hauptsaugplatte 7a der oberen Außensaugplatte 13 gegenübersteht, kann in gleicher Weise die Übergabe des betrachteten Bahnabschnittes, der schon vorgewärmt ist, auf die mittlere Hauptsaugplatte 7a vorgenommen werden. Dies erfolgt durch Umschalten der Sauger der Außensaugplatte 13 auf Druckluft und Einschalten der Sauger der mittleren Hauptsaugplatte 7a auf Ansaugen.

Nachdem die Außensaugplatten horizontal nach außen gefahren sind, kann sich der Vorschubwärmebacken 5 wieder nach unten die Position der Figur 3b bewegen. Jetzt steht die mittlere Hauptsaugplatte 7a der unteren Außensaugplatte 13 gegenüber. Es kann hier eine Übergabe des vorderen, plattenförmigen Abschnittes der Kunststoffbahn 40 auf die untere Außensaugplatte 13 erfolgen. Nach Herstellung des seitlichen Abstandes kann der Vorschubwärmebacken 5 erneut um eine Stufe nach oben in die Position der Figur 3a fahren.

Danach steht die untere Hauptsaugplatte 7b der unteren Außensaugplatte gegenüber und kann den vorderen plattenförmigen Abschnitt der Kunststoffbahn 40 zum letzten Erwärmen übernehmen.

Ist danach wieder der seitliche Abstand zwischen den Hauptsaugplatten 7b und den Außensaugplatten 13 geschaffen und hat sich der Vorschubwärmebacken 5 wieder nach unten in die Position der Figur 3b bewegt, dann steht die untere Hauptsaugplatte 7b dem Tiefziehwerkzeug 16 gegenüber.

Das Tiefziehwerkzeug 16 kann an die untere Hauptsaugplatte 7b heranfahren und den Rand abdichten. Wenn nun Saugluft in den einzelnen Tiefziehwerkzeugen 16 eingeschaltet wird und das Tiefziehen beginnt, schneidet gleichzeitig das Messer 47 den vordersten plattenförmigen Abschnitt von der übrigen kontinuierlichen Kunststoffbahn 40 ab. Die Halbschale wird währenddessen geformt, und der Vorschubwärmebacken 5 befindet sich immer noch in seiner unteren, in Figur 3b dargestellten Position.

Wird der Vorschubwärmebacken 5 in Richtung des Pfeiles 21 nach oben bewegt, stehen sich zwei soeben tiefgezogene Halbschalen (bzw. Halbschalengruppen) einander gegenüber, wobei die vordersten ebenen Bereiche ihre Ränder 6 sind. Die Tiefziehwerkzeuge werden in Richtung des Pfeiles 20 horizontal aufeinanderzubewegt und die Ränder aufeinandergedrückt. Damit sind die beiden Halbschalen zu einer Packung vereinigt (bzw. die Halbschalengruppen sind zu Packungsgruppen vereinigt).

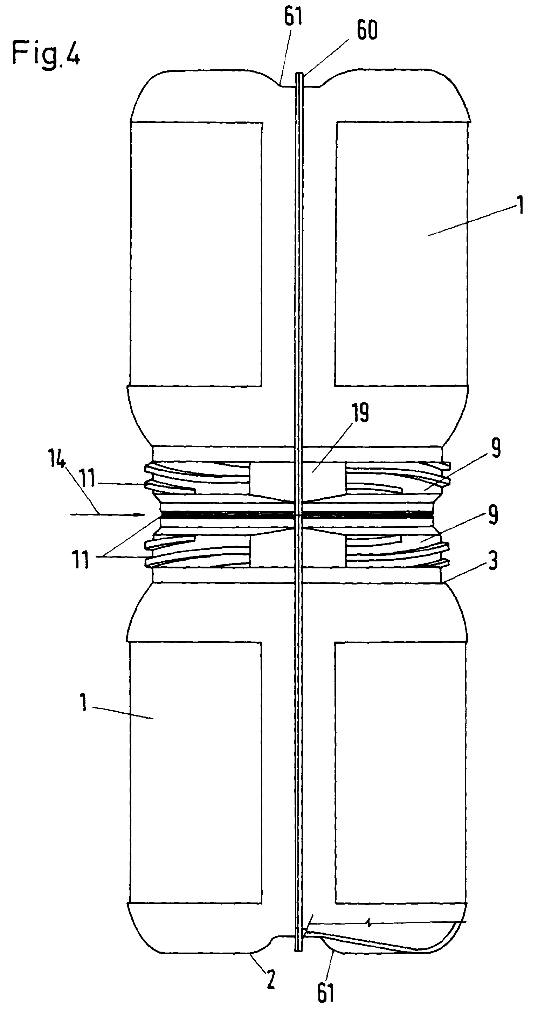

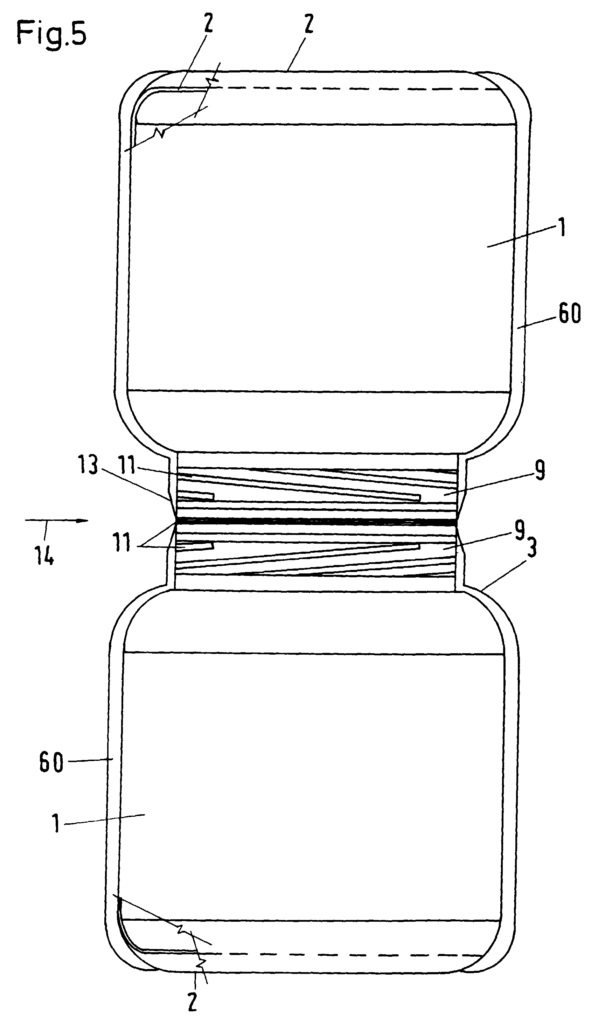

Betrachtet man die Figuren 4 und 5, dann sieht man dort die noch Kopf an Kopf aneinander befestigten Packungen mit Seitenwänden 1, Boden 2 und Oberwand 3. In einer Ebene zur Längsmittelachse der Packung 1 liegt eine Naht 60, die auch Schweißnaht genannt wird und die Packung umzieht. Sie teilt die Packung in zwei Hälften und durchzieht den Boden 2 längs einer Vertiefung 61, so daß insgesamt gesehen der Boden 2 im wesentlichen flach mit ebener Außenkontur ist, ohne daß die herausstehende Naht 60 stört. Am Oberboden 3 erkennt man einen außen hochstehenden Bund 9 mit Außengewinde 11.

Die Naht 60 läuft bis an den oberen Rand des Bundes 9, wo die beiden Bünde noch miteinander verbunden sind, läuft aber bis an diese mittlere Verbindungsstelle im letzten Stück 13 verjüngt auf diese zu.

Aus der Darstellung der Figur 4 sieht man, daß die Naht 60 aus zwei Randflanschen des Paares von Formhälften gebildet ist, denn diese Ränder oder Randflansche sind zu der genannten Naht 60 zusammengeschweißt. Man erkennt die nach außen im wesentlichen geschlossene Gesamtheit der hier dargestellten zwei Kopf an Kopf über die Bünde 9 miteinander verbundenen Packungen, die aus einem linksseitigen Formhälftenpaar und einem rechtsseitigen Formhälftenpaar gebildet sind. Getrennt wird später (siehe Station 52 in Figur 1) entlang der in Figur 4 durch den Pfeil 14 dargestellten Linie. Durch das Trennen werden die Paare von Packungen voneinander separiert, so daß sich dann zwei Einzelpackungen ergeben bzw. zwei Reihen von hintereinander angeordneten Packungen, wie in Figur 1 dargestellt ist.

## Patentansprüche

1. Verfahren zur Herstellung einer Halbschale aus thermoformbarem Kunststoff, bei welchem wenigstens ein zu bearbeitender, plattenförmiger Abschnitt des Kunststoffmaterials intermittierend auf vertikalem Weg (21) durch wenigstens zwei in Bewegungsrichtung (21, 44) hintereinander angeordnete Erwärmungsstationen (45) nach unten zu einer Tiefziehstarion (16, 24) transportiert und danach tiefgezogen wird, dadurch gekennzeichnet, daß das Kunststoffmaterial in Form einer kontinuierlichen Bahn (40) von oberhalb der ersten Erwärmungsstation (45) unter Erwärmung der Bahnabschnitte während der Bewegung vertikal nach unten bis zur Tiefziehstation (24) zugeführt wird, an deren oberem Ende (46) der vorderste, unterste plattenförmige Abschnitt von der Kunststoffbahn (40) beim Tiefziehen abgetrennt und tiefgezogen wird.

2. Verfahren nach Anspruch 1, dadurch gekennzeichnet, daß das Abtrennen des untersten plattenförmigen Abschnittes von der Kunststoffbahn (40) in erwärmtem, plastischem Zustand durch mechanisches Abquetschen während des Tiefziehens erfolgt.

3. Verfahren nach Anspruch 1 oder 2, dadurch gekennzeichnet, daß zwei kontinuierliche Kunststoffbahnen (40) im Abstand voneinander gleichzeitig vertikal so nach unten bewegt werden, daß ihre ebenen Flächen parallel und einander zugewandt liegen, und daß die tiefgezogenen Halbschalen danach zur Bildung des Volumens einer Fließmittelpackung (48) längs ihrer Ränder (6) miteinander verschweißt werden.

4. Vorrichtung zur Herstellung einer Halbschale aus thermoformbarem Kunststoff, bei der ein mittig angeordneter, translatorisch entlang einem Weg bewegbarer Vorschubwärmebacken (5) mit beheizbarem Hauptträger (6) und Hauptsaugplatten (7, 7a, 7b) sowie zu beiden Seiten außen angeordnete und senkrecht zu dem ersten Weg bewegbare Außenwärmebacken (14) eine Erwärmungsstation (45) bilden, um wenigstens einen zu bearbeitenden, plattenförmigen Abschnitt des Kunststoffmaterials intermittierend auf vertikalem Weg durch wenigstens zwei in Bewegungsrichtung (21, 44) hintereinander angeordnete Erwärmungsstationen (45) nach unten zu einer unter der Erwärmungsstation (45) angeordneten Tiefziehstation (16, 24) zu transportieren und danach tiefzuziehen, dadurch gekennzeichnet, daß über der obersten Erwärmungsstation (45) eine Umlenkrolle (43) mit vorgeschalteten Fördereinrichtungen (39, 41, 42) für eine zugeführte, kontinuierliche Kunststoffbahn (40) vorgesehen ist und daß auf der Höhe der Oberkante (46) des Tiefziehwerkzeuges (16) ein über die Breite (B) der Kunststoffbahn (40) reichendes Messer (47) bewegbar angebracht ist.

5. Vorrichtung nach Anspruch 4, dadurch gekennzeichnet, daß auf der Höhe unter dem Tiefziehwerkzeug (16) und seitlich in horizontalem Abstand von einer vertikalen Symmetrieebene (37) sowie voneinander zwei Vorratsrollen (39) für je eine Kunststoffbahn (40) angeordnet sind, die jeweils über Fördereinrichtungen (41, 42) zu einer seitlich neben der Symmetrieebene (37) angeordneten Umlenkrolle (43) bewegbar ist und daß zwei im Abstand voneinander angeordnete, bewegbare, längliche Messer (47) vorgesehen sind, die parallel zueinander und zur Symmetrieebene (37) angeordnet sind.

## Claims

1. A method for manufacturing a half-shell of thermoformable plastics material, wherein at least one plate-like section to be worked of the plastics material is conveyed intermittently on a vertical path (21) through at least two heating stations (45) arranged in succession in the direction of movement (21, 44), downwardly to a deep-drawing station (16, 24), and then deep-drawn, characterised in that the plastics material is supplied in the form of a continuous web (40) from above the first heating station (45), the web sections being heated during movement, vertically downwardly to the deep-drawing station (24), at the upper end (46) of which the front-most, bottom-most plate-like section is separated from the web (40) of plastics material during deep-drawing, and is deep-drawn.

2. A method according to Claim 1, characterised in that the bottom-most plate-like section is separated from the web (40) of plastics material in the heated, plastic state by mechanical squeezing during deep-drawing.

3. A method according to Claim 1 or Claim 2, characterised in that two continuous webs (40) of plastics material are moved vertically downwardly simultaneously at a spacing apart in such a way that their flat surfaces lie parallel to, and facing, each other, and that the deep-drawn half-shells are then welded together along their edges (6) to form the volume of a pack (48) for flowing media.

4. An apparatus for manufacturing a half-shell of thermoformable plastics material, wherein a centrally arranged advance feed heating jaw (5) movable in translatory manner along a path and having a heatable main carrier (6) and main suction plates (7, 7a, 7b), as well as outer heating jaws (14) arranged outwardly on either side and movable perpendicularly to the first path form a heating station (45) for conveying then deep-drawing at least one plate-like section of plastics material which is to be worked, intermittently on a vertical path through at least two heating stations (45) arranged in succession in the direction of movement (21, 44), downwardly to a deep-drawing station (16, 24) arranged under the heating station (45), characterised in that a direction-changing roller (43) with conveyance devices (39, 41, 42) arranged upstream is provided above the uppermost heating station (45) for a continuous web (40) of plastics material supplied thereto, and that a blade (47) which reaches across the width (B) of the web (40) of plastics material is movably arranged at the level of the upper edge (46) of the deep-drawing tool (16).

5. An apparatus according to Claim 4, characterised in that arranged at the level below the deep-drawing tool (16) and laterally at a horizontal spacing from a vertical plane of symmetry (37) and also from one another are two supply rollers (39), one for each web (40) of plastics material, each of which is movable by conveyance devices (41, 42) towards a direction-changing roller (43) arranged laterally adjacent to the plane of symmetry (37), and that two movable elongate blades (47) arranged at a spacing apart are provided which are arranged parallel to each other and to the plane of symmetry (37).

## Revendications

1. Procédé pour fabriquer une demi-coque en un plastique thermoformable, dans lequel au moins un segment du matériau plastique à transformer, en forme de plaque, est transporté d'une manière intermittente sur un trajet vertical (21) an passant par au moins deux stations de chauffage (45) disposées l'une derrière l'autre dans la direction du déplacement (21, 44), vers le bas jusqu'à une station d'emboutissage (16, 24) pour y être ensuite emboutis, caractérisé an ce que le matériau plastique est, sous forme d'une bande continue (40), amené depuis un point situé au-dessus de la première station de chauffage (45), les segments de bande étant soumis à un chauffage pendant le déplacement, et ce verticalement vers le bas jusqu'à la station d'emboutissage (24), an l'extrémité supérieure (46) de laquelle le segment en forme de plaque situé le plus an avant et le plus en bas de la bande plastique (40) est séparé lors de l'emboutissage, puis est embouti.

2. Procédé selon la revendication 1, caractérisé en ce que la séparation du segment an forme de plaque le plus inférieur de la bande plastique (40) est, à l'état plastique chauffé, réalisée par écrasement mécanique pendant l'emboutissage.

3. Procédé selon la revendication 1 ou 2, caractérisé an ce que deux bandes plastiques continues (40) sont déplacées simultanément à distance l'une de l'autre, verticalement vers le bas de telle sorte que leurs faces planes soient parallèles et dirigées l'une vers l'autre, et que les demi-coques embouties sont ensuite soudées l'une à l'autre, le long de leurs bords (6), pour former le volume d'un emballage (48) pour liquides.

4. Appareillage pour fabriquer une demi-coque an un plastique thermoformable, dans lequel une mâchoire chauffante d'avance (5), disposée on un point central et pouvant subir un déplacement de translation le long d'un trajet, comportant une poutre principale chauffante (6) et des plaques d'aspiration principales (7, 7a, 7b), et des mâchoires chauffantes extérieures (14), disposées vers l'extérieur sur les deux côtés et mobiles perpendiculairement au premier trajet, forment une station de chauffage (45), pour transporter au moins un segment en forme de plaque, destiné à être transformé, du matériau plastique, d'une manière intermittente sur un trajet vertical, en passant par au moins deux stations de chauffage (45) disposées l'une derrière l'autre dans la direction du déplacement (21, 44), vers le bas jusqu'à une station d'emboutissage (16, 24) disposée en-dessous de la station de chauffage (45), pour y subir ensuite un emboutissage, caractérisé on ce qu'il est prévu au-dessus de la station de chauffage (45) située le plus haut un rouleau de renvoi (43) comportant des dispositifs de transport amont (39, 41, 42) destinés à une bande plastique (40) continue et amenée, et que, à hauteur de l'arête supérieure (46) du moule d'emboutissage (16), est rapportée d'une manière mobile une lame coupante (47) qui s'étend sur toute la largeur (B) de la bande plastique (40).

5. Appareillage selon la revendication 4, caractérisé on ce que, à la hauteur d'un point situé endessous du moule d'emboutissage (16), et latéralement selon un écart horizontal par rapport à un plan de symétrie vertical (37) et aussi à une certaine distance l'un de l'autre, on a disposé deux rouleaux d'alimentation (39), chacun destiné à une bande plastique (40), chacune de ces dernières pouvant, grâce à des dispositifs transporteurs (41, 42), être déplacée jusqu'à un rouleau de renvoi (43), disposé latéralement à côté du plan de symétrie (37), et en ce que sont prévues deux laines de coupe (47), oblongues, mobiles et disposées à distance l'une de l'autre, qui sont disposées parallèlement l'une à l'autre et au plan de symétrie
